## Europäisches Patentamt
## European Patent Office
## Office européen des brevets

(11) Numéro de publication: **0 156 751**
**B1**

(12) # FASCICULE DE BREVET EUROPÉEN

(45) Date de publication du fascicule du brevet:
**19.04.89**

(51) Int. Cl.⁴: **A 61 C 13/24,** A 61 C 13/00

(21) Numéro de dépôt: **85440016.5**

(22) Date de dépôt: **28.02.85**

(54) Fixateur d'une prothèse dentaire.

(30) Priorité: **01.03.84 FR 8403348**

(43) Date de publication de la demande:
**02.10.85 Bulletin 85/40**

(45) Mention de la délivrance du brevet:
**19.04.89 Bulletin 89/16**

(84) Etats contractants désignés:
**BE DE GB IT**

(56) Documents cité:
**CH-A-186 660**
**DE-A-1 922 306**
**DE-A-2 637 994**
**US-A-3 845 558**

(73) Titulaire: **Hueber, Véronique, 31a, rue de Belfort,
F-67100 Strasbourg (FR)**

(72) Inventeur: **Volin, Charles, 56, rue Mélanie, F-67000
Strasbourg (FR)**

(74) Mandataire: **Nuss, Pierre, 10, rue Jacques Kablé,
F-67000 Strasbourg (FR)**

## Description

L'invention a trait à un fixateur d'une prothèse dentaire.

De nombreuses personnes sont obligées de porter des prothèses dentaires. Cependant, la forme de ces prothèses doit être adaptée à la bouche du porteur de prothese et, de ce fait, la forme varie avec chacun, notamment au niveau gingival.

Un des problèmes essentiels pour les porteurs de prothèse dentaire réside dans le maintien constant de la prothèse dans la bouche. Il serait donc souhaitable que la prothèse soit ajustée d'une manière très précise. Toutefois, lorsque la prothèse est bien ajustée, il résulte fréquemment une friction entre le palais et la prothèse, ce qui incommode l'usager.

Par ailleurs, on a constaté qu'il se crée petit à petit un jeu de plus en plus conséquent entre la bouche et la prothèse, ce qui rend la fixation et le maintien de cette dernière dans la bouche très problématique.

Pour pallier ces inconvénients, on a conçu des ocoussinets que l'on pose sur la face externe des prothèses dentaires. Ces coussinets, pourvus d'une toile de protection enlevée au moment de la pose nécessitent des précautions relativement draconiennes. En effet, il faut, au préalable, brosser la prothèse à fond pour enlever la plus petite trace de graisse, puis il faut essuyer très soigneusement ladite prothèse et, finalement, il faut couper le coussinet à la forme et à la dimension de la prothèse. Puis, après avoir enlevé la toile protectrice, il faut légèrement chauffer le coussinet pour assurer correctement son adhésion à ladite prothèse cependant, on a constaté qu'il fallait remplacer fréquemment ces coussinets et que leur destination réelle n'était pas la fixation de la prothèse mais plutôt d'annihiler les frottements entre la prothèse et la bouche, ceci étant nettement perceptible pour la mâchoire inférieure.

On connaît également l'usage de poudres adhésives que l'on répand sur les faces externes de la prothèse et qui doivent assurer la liaison entre cette dernière et la bouche. Toutefois, la durée d'adhésion n'excède pas quelques jours et l'usager risque que la prothèse se détache. De ce fait, la poudre adhésive se répand dans la bouche, ce qui est, non seulement, désagréable mais peut entraîner des situations délicates.

Il est également connu par DE-A-1 922 306 un dispositif de fixation d'une prothèse dentaire dans lequel des ventouses sont montées sur une bande en matière plastique qui est fixée sur ladite prothèse. Dans ce mode de réalisation, la prothèse peut être déplacée de sa position initiale de fixation à la mâchoire, de sorte que ladite position ne peut pas être garantie et que la prothèse peut basculer. Ainsi la position relative de la prothèse dentaire par rapport à la mâchoire est faussée. Ce basculement est dû, en particulier, au fait que les ventouses sont montées sur la bande en matière plastique, réalisant ainsi un écartement relativement important entre la prothèse et les faces de réception de cette dernière de la mâchoire.

En outre, le dispositif selon DE-A-1 922 306 présente l'inconvénient supplémentaire que les ventouses de forme circulaire sont pressées, notamment lors de la mastication, dans les gencives de la mâchoire, ce qui entraîne des douleurs et des inflammations de la mâchoire, comme l'ont démontré des expériences.

La présente invention a pour but de remédier à ces inconvénients et se propose de fournir des moyens de fixation dans la bouche d'une prothèse dentaire assurant un maintien de longue durée de la prothèse dentaire et pouvant s'adapter à toutes les formes et dimensions des prothèses dentaires.

A cet effet, l'invention concerne un fixateur d'une prothèse dentaire composé d'un corps élastique ayant deux faces parallèles, dont l'une des faces est pourvue d'un adhésif et comportant des évidements disposés à intervalles réguliers soumis lors de la pose de la prothèse dentaire à un effet de vacuum exerçant une succion sur la peau de la bouche, caractérisé en ce que les évidements sont prévus dans l'épaisseur du corps élastique.

L'invention sera bien comprise en se référant à la description suivante faite à titre d'exemple non limitatif et au dessin ci-annexé dans lequel:

la figure 1 est une vue en plan du fixateur conforme à l'invention utilisé notamment pour la mâchoire supérieure,

la figure 2 est une vue en coupe selon la ligne de coupe II - II de la figure 1,

la figure 3 est une vue en plan du fixateur destiné à la mâchoire inférieure,

la figure 4 est une vue plan d'une mâchoire supérieure pour vue du fixateur,

la figure 5 est une vue en plan de la mâchoire inférieure pourvue du fixateur.

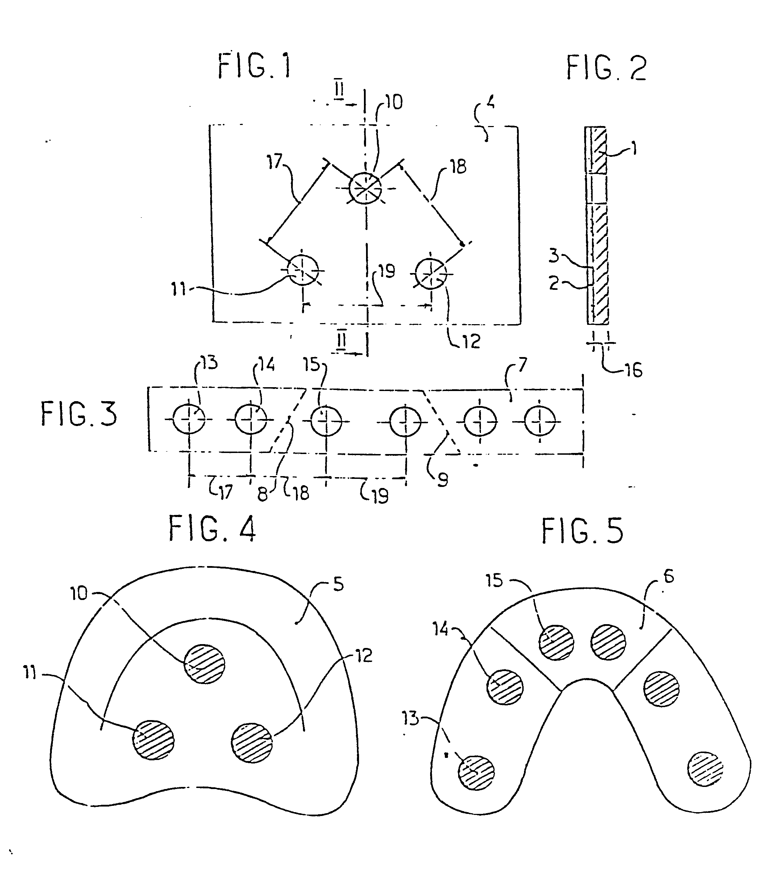

On se réfère aux figures 1 à 3.

Le fixateur de prothèse dentaire comporte un corps élastique 1 réalisé soit en caoutchouc, soit en matière plastique ou en toute autre matière souple adapté aux besoins d'hygiène prévue par les prescriptions légales en la matière. Sur une des faces 2 le corps élastique 1 est pourvu d'un adhésif 3 permettant de rendre la fixateur solidaire de la prothèse dentaire. Comme visible à la figure 1, le fixateur comporte une surface rectangulaire 4 que l'on adapte à la prothèse de la mâchoire supérieure 5 (voir figure 4) en procédant à une découpe de cette surface rectangulaire en fonction de la dimension de ladite prothèse 5.

Pour la prothèse de la mâchoire inférieure (voir figure 5), on confère corps élastique 7 la forme d'une bande que l'on découpe selon des lignes de coupe 8, 9 pour recouvrir correctement et l'adapter à la surface de la prothèse de la mâchoire inférieure 6. Bien entendu, ce corps élastique 7 comporte également sur une de ses faces un adhésivf permettant de rendre le fixateur solidaire de la prothèse dentaire.

Conformément à l'invention, on réalise dans le corps élastique 1 ou dans le corps élastique 7 des évidements 10, 11, 12 et 13, 14, 15... Ces évidements 10 à 15 sont de préférence circulaires.

Selon un premier mode de réalisation, la hauteur de ces évidements 10 à 15 est inférieure à l'épaisseur 16 du corps élastique 1, 7.

Selon un second mode de réalisation, ces évidements 10 à 15 traversent de part en part lesdits corps élasitques 1, 7.

Pour le fixateur destiné à la prothèse de la mâchoire supérieure, les évidements 10, 11, 12 sont disposés en quinconce à intervalles 17, 18, 19, ces intervalles pouvant être égaux et former entre eux un triangle équilatéral. Cependant, le nombre des évidements 10, 11, 12 n'est pas limitatif mais il est souhaitable que les intervalles restent réguliers.

Pour le fixateur destiné à la prothèse de la mâchoire inférieure, les évidements 13, 14, 15 sont également réalisés à intervalles de préférence réguliers 17, 18, 19, mais sont disposés dans un même alignement.

La combinaison de ces évidements 10 à 15 avec l'élasticité du corps élastique 1, 7 permet d'obtenir un effet de vacuum. En effet, en appliquant le corps élastique 1, 7 sur la face de la prothèse dentaire dirigée vers les gencives, la prothèse dentaire obture un des côtés des évidements 10 à 15. En appliquant la prothèse dentaire sur la peau du palais de la bouche, il y a un écrasement du corps élastique 1, 7 et l'air est chassé des évidements 10 à 15. En relâchant la pression sur la prothèse dentaire, le vide créé dans les évidements 10 à 15 exerce une succion et on obtient ainsi la fixation et le maintien de la prothèse dentaire.

## Revendications

1. Fixateur d'une prothèse dentaire composé d'un corps élastique (1, 7, 20) ayant deux faces parallèles, dont l'une des faces (2) est pourvue d'un adhésif, et comportant des évidements (10 à 15) disposés à intervalles réguliers (17, 18, 19) soumis lors de la pose de la prothèse dentaire à un effet de vacuum exerçant une succion sur la peau de la bouche, caractérisé en ce que les évidements (10 à 15) sont prévus dans l'épaisseur du corps élastique.

2. Fixateur selon la revendication 1, caractérisé en ce que le corps élastique (1) est formé par une surface rectangulaire (4) adaptable à la prothèse et dans laquelle les évidements (10, 11, 12) sont disposés en quinconce

3. Fixateur selon la revendication 1, caractérisé en ce que le corps élastique (7) est formé par une bande adaptable à la prothèse et dans laquelle les évidements (13, 14, 15) sont disposés dans un même alignement.

4. Fixateur selon la revendication 1, caractérisé en ce que les évidements (10 à 15) comportent une hauteur inférieure à l'épaisseur (16) du corps élastique (1, 7).

5. Fixateur selon la revendication 1, caractérisé en ce que les évidements (10 à 15) traversent de part en part le corps élastique (1, 7).

## Patentansprüche

1. Haftband für eine Zahnprothese, bestehend aus einem zwei parallele Seiten besitzenden elastischen Körper (1, 7, 20), wovon eine Seite (2) mit einem Haftmittel versehen ist und in regelmäßigen Abständen (17, 18, 19) angeordnete Vertiefungen (10 bis 15) besitzt, welche während des Anlegens der Zahnprothese einem Vakuumeffekt unterworfen sind, wodurch eine Saugwirkung auf die Haut im Mund ausgeübt wird, dadurch gekennzeichnet, daß die Vertiefungen (10 bis 15) in der Dicke des elastischen Körpers vorgesehen sind.

2. Haftband nach Anspruch 1, dadurch gekennzeichnet, daß der elastische Körper (1) aus einer an die Prothese anpaßbaren, rechteckigen Fläche (4) besteht, und in welcher die Vertiefungen (10, 11, 12) wechselständig angeordnet sind.

3. Haftband nach Anspruch 1, dadurch gekennzeichnet, daß der elastische Körper (7) aus einen an die Prothese anpaßbaren Band besteht, in welchem die Vertiefungen (13, 14, 15) in einer Reihe ausgerichtet angeordnet sind.

4. Haftband nach Anspruch 1, dadurch gekennzeichnet, daß die Höhe der Vertiefungen (10 bis 15) geringer ist als die Dicke (16) des elastischen Körpers (1, 7).

5. Haftband nach Anspruch 1, dadurch gekennzeichnet, daß die Vertiefungen (10 bis 15) den elastischen Körper (1, 7) vollständig durchqueren.

## Claims

1. Dental prosthesis liner consisting of a resilient body (1, 7, 20) having two parallel faces, of which one of the faces (2) is provided with an adhesive, and comprising cavities (10 to 15) disposed at regular intervals (17, 18, 19) depending on the position of the dental prosthesis on a vacuum effect exerting a suction on the skin of the mouth, characterised in that the cavities (10 to 15) are provided in the thickness of the resilient body.

2. Liner according to claim 1, characterised in that the resilient body (1) is formed by a rectangular surface (4) adaptable to the prosthesis and in which the cavities (10, 11, 12) are staggered.

3. Liner according to claim 1, characterised in that the resilient body (7) is formed by a band adaptable to the prosthesis and in which the cavities (13, 14, 15) are disposed in a single row.

4. Liner according to claim 1, characterised in that the cavities (10 to 15) comprise a lower height than the thickness (16) of the resilient body (1, 7).

5. Liner according to claim 1, characterised in that the cavities (10 to 15) extend right through the resilient body (1, 7).

FIG.1

FIG.2

FIG.3

FIG. 4

FIG.5